# EUROPEAN PATENT APPLICATION

(11) **EP 1 548 570 A2**
(43) Date of publication of application: **29.06.2005**
(21) Application number: 04257714.8
(22) Date of filing: 13.12.2004
(51) Int. Cl.: G06F 3/12

(54) **Printing system, control method therefor, and print control method, host apparatus, and printer therewith**

(30) Priority: 15.12.2003 JP 2003416727; 31.05.2004 JP 2004161573
(71) Applicant: CANON KABUSHIKI KAISHA, Ohta-ku, Tokyo (JP)
(72) Inventor: Sakamoto, Yoichi, Ohta-ku Tokyo (JP)
(74) Representative: Legg, Cyrus James Grahame

(57) **Abstract**

Before transmitting printing data of a printing job, a host apparatus instructs a printer to change to an occupied state in order to minimize a downtime between jobs. After the printer changes to the occupied state in response to an instruction from the host apparatus, and the host apparatus finishes transmission of the printing job, the host apparatus instructs the printer to change to a vacated state without waiting for a printing completion notification from the printer. The printer changes to the vacated state in response to an instruction from the host apparatus.

## Description

### BACKGROUND OF THE INVENTION

### Field of the Invention

The present invention relates to a printing system formed by using a bidirectional interface to connect a printer and a host apparatus including a page memory for error recovery.

### Description of the Related Art

In a printing system including a host apparatus and a printer, in order to recover from an error such as a paper jam, by providing the printer with a page memory, printing data stored in the page memory is commonly used to perform error recovery when an error, such as a paper jam, occurs.

In this method for error recovery, error recovery is impossible unless the printer includes a memory having a storage capacity capable of storing at least printing data for one page. In addition, in order for the printer to print at the maximum printing speed of the printer engine, feeding, printing, and discharge of plural pages must be performed in parallel. Thus, error recovery is impossible unless the printer includes a memory having a storage capacity capable of storing printing data for approximately three to six pages. Accordingly, particularly in the case of a high resolution printer or color printer for large data size, a mass storage memory is required for storing printing data for one page, thus causing the problem of increased printer cost.

To solve this problem, technologies in which the storage capacity of a printer is minimized by providing a host apparatus with a page memory for error recovery are known (see, for example, Japanese Patent Laid-Open Nos. 8-258375 and 9-282114).

However, these technologies have a problem in that printer performance deteriorates, because, during the period until one printing job finishes, the printer is occupied so as to be prevented from being interrupted by another printing job, and thus the printer must be continuously occupied until the final page of the printing job is discharged and the printing normally finishes. In addition, pages of another printing job cannot be consecutively printed, thus causing a downtime between jobs.

### SUMMARY OF THE INVENTION

To solve the above problems, the present invention minimizes a downtime between jobs.

According to an aspect of the present invention, a printing system is provided that includes at least one host apparatus including a page memory for error recovery and a printer connected to the host apparatus via a bidirectional interface. The host apparatus includes an instructing unit that instructs the printer to change to an occupied state before transmitting printing data of a printing job to the printer, and that instructs the printer to change to a vacated state without waiting for a printing completion notification from the printer after transmitting the printing data. The printer includes a unit for changing the printer to one of the occupied state and the vacated state in response to an instruction from the host apparatus.

According to another aspect of the present invention, a method for controlling a printing system is provided. The printing system includes at least one host apparatus including a page memory for error recovery and a printer connected to the host apparatus via a bidirectional interface. The method includes steps of: instructing the printer to change to an occupied state before transmitting printing data of a printing job to the printer; instructing the printer to change to a vacated state without waiting for a printing completion notification from the printer after transmitting the printing data; and changing the printer to one of the occupied state and the vacated state in response to an instruction from the host apparatus.

According to another aspect of the present invention, a printing method is provided which includes steps of: transmitting an occupation request to a printer before transmitting printing data of a printing job to the printer; transmitting a vacating request to the printer after transmitting the printing data; and monitoring status of the printer after transmitting the vacating request to the printer; and transmitting the occupation request to the printer before transmitting the printing data to the printer in case that an error is detected.

According to another aspect of the present invention, a program is provided for performing the printing method described above.

According to another aspect of the present invention a host apparatus is provided that includes: a first unit that transmits an occupation request to a printer before transmitting printing data of a printing job to the printer; a second unit that transmits a vacating request to the printer after transmitting the printing data; and a third unit that monitors status of the printer after transmitting the vacating request to the printer, and transmitting the occupation request before transmitting the printing data to the printer in case that an error is detected.

According to another aspect of the present invention, a printing method is provided which includes steps of: determining whether an error job is detected in receiving an occupation request; if the error job is detected, determining whether a job that transmits the occupation request matches the error job; and transmitting a normal response in case that the job that transmits the occupation request matches the error job, and transmitting an error response in case that the job that transmits the occupation request does not match the error job.

According to another aspect of the present invention, a program is provided that allows a computer to execute the printing method described above.

According to another aspect of the present invention, a printer is provided which includes: a unit that determines whether an error job is detected in receiving an occupation request; a unit that determines whether a job that transmits the occupation request matches the error job in case that the error job is detected; and a unit that transmits a normal response in case that the job that transmits the occupation request matches the error job, and transmits an error response in case that the job that transmits the occupation request does not match the error job.

According to another aspect of the present invention, a printer is provided which includes: a first unit that sets a first job to be in a printer occupying state in response to an occupying request from the first job, and that cancels the occupying state of the first job in response to a vacating request from the first job; and a second unit that cancels a printer occupying state of a second job in response to an error in the first job during occupation of the printer by the second job.

According to another aspect of the present invention, a print control method is provided which includes steps of: setting a first job to be in a printer occupying state in response to a printer occupying request from the first job; canceling the occupying state of the first job in response to a vacating request from the first job; and canceling an occupying state of the second job in response to an error in the first job during occupation by a second job.

According to another aspect of the present invention, a program is provided that allows a computer to execute the steps of the printing method described above.

According to another aspect of the present invention, a print control apparatus is provided which includes: a first instructing unit that instructs a printer to change to an occupied state before transmitting printing data of a printing job to the printer, and instructs the printer to change to a vacated state without waiting for a printing completion notification from the printer after transmitting the printing data; and a second instructing unit that performs status monitoring after the printer is changed to the vacated state by the first instructing unit, and instructs the printer to change to the occupied state in case that an error is detected.

According to another aspect of the present invention, a print control method is provided which includes: instructing a printer to change to an occupied state before transmitting printing data of a printing job to the printer; instructing the printer to change to a vacated state after transmitting the printing data without waiting for a printing completion notification from the printer; performing status monitoring after the printer is changed to the vacated state; and instructing the printer to change to the occupied state in case that an error is detected.

According to another aspect of the present invention, a program is provided which allows a computer to execute a printing method as described above.

Further features and advantages of the present invention will become apparent from the following description of the preferred embodiments with reference to the attached drawings.

### BRIEF DESCRIPTION OF THE DRAWINGS

Fig. 1 is a block diagram showing the configuration of a host apparatus in a first embodiment of the present invention.

Fig. 2 is a schematic block diagram showing the configuration of a printer in the first embodiment.

Fig. 3 is a block diagram showing an example of the data structure of job management information in the first embodiment.

Fig. 4 is a flowchart showing a process of a language monitor in the first embodiment.

Fig. 5 is a detailed flowchart showing the data transmission process shown in Fig. 4.

Fig. 6 is a detailed flowchart showing a status monitoring process.

Fig. 7 is a flowchart showing command processing in the printer shown in Fig. 1.

Fig. 8 is a flowchart showing printing by the printer shown in Fig. 1.

Fig. 9 is a flowchart showing a process of a language monitor in a second embodiment of the present invention.

Fig. 10 is a flowchart showing printing by the printer in the second embodiment.

Fig. 11 is an illustration of a change from a job occupying state into a job vacating state when an error occurs.

### DESCRIPTION OF THE EMBODIMENTS

Exemplary embodiments of the present invention are described below with reference to the accompanying drawings. The following embodiments describe a method in which, in a system formed by connecting a plurality of host apparatuses and a printer through a bidirectional interface, a downtime between printing jobs sent from host apparatus to the printer is minimized.

### First Embodiment

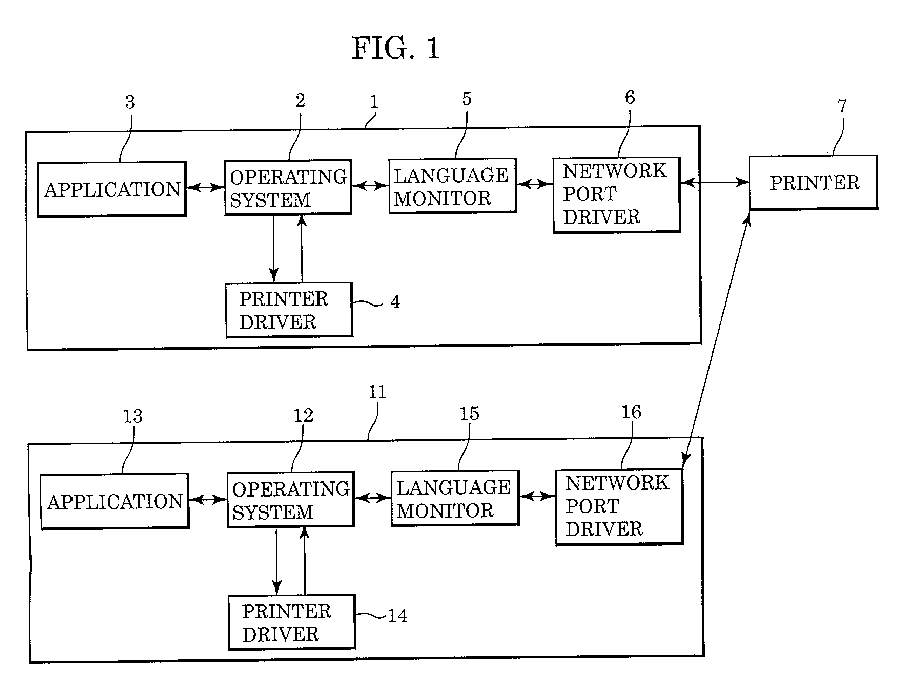

Fig. 1 is a block diagram showing the configurations of host apparatuses in a first embodiment of the present invention. Referring to Fig. 1, a computer 1 (or a computer 11), such as a personal computer or workstation, functions as a host apparatus, and has hardware (not shown) such as a central processing unit (CPU), a hard disk, a flexible disk drive, a keyboard, a monitor, and a network interface. An operating system 2 (or an operating system 12) manages the hardware of the computer 1 (or the computer 11), and software modules such as an application, a printer driver, a language monitor, and a network port driver.

An application 3 (or an application 13) is, for example, software such as word processing software, and performs document preparation or printing in response to an instruction by a user. A printer driver 4 (or a printer driver 14) receives a printing command issued from the application 3 (or the application 13) through the operating system 2 (or the operating system 12), and converts the printing command into a printer command interpretable by a language monitor 5 (or a language monitor 15) and a printer 7, which are described later. The language monitor 5 (or the language monitor 15) receives the printer command output from the printer driver 4 (or the printer driver 14) and transmits the printing command to the printer 7 through a network port driver 6 (or a network port driver 16), which is described later.

In the first embodiment, based on the printing command issued from the application 3 (or the application 13), the printer driver 4 (or the printer driver 14) converts data into compressed image data, and outputs the compressed image data, with a page start command for designating sheet size, the line length of the image data, and the number of lines of the image data, and an image data ending command representing the end of the image data.

In a memory of the computer 1 (or the computer 11), a page buffer, whose details are described later, is defined, and the page buffer stores the compressed image data from the printer driver 4 (or the printer driver 14).

The network port driver 6 (or the network port driver 16) transmits the printer command output by the language monitor 5 (or the language monitor 15) to the printer 7 through a network interface. In addition, when receiving a status from the printer 7, the network port driver 6 (or the network port driver 16) outputs the status to the language monitor 5 (or the language monitor 15). The printer 7 receives the printer command output from the network port driver 6 (or the network port driver 16), and performs printing in accordance with the printing command.

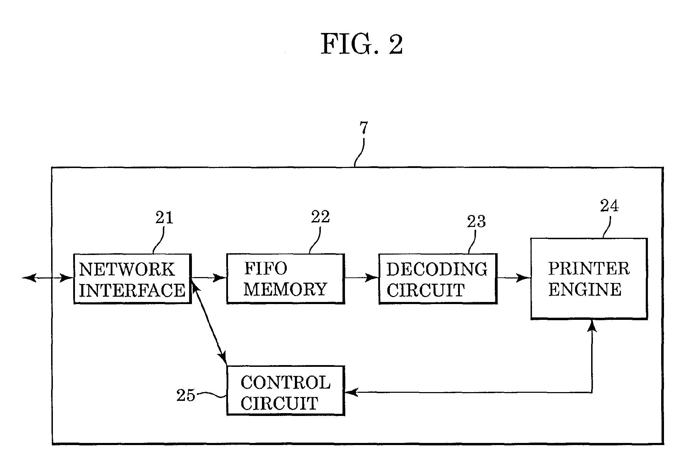

Fig. 2 is a schematic block diagram showing the configuration of the printer 7 in the first embodiment. In the first embodiment, an electrophotographic laser beam printer is described as the printer 7. However, the present invention may be applied not only to the electrophotographic laser beam printer, but also to an ink jet printer.

Referring to Fig. 2, the printer 7 includes a network interface 21 that controls data communication with the computer 1 (or the computer 11) through a network. For example, the network interface 21 receives the above printer command from the computer 1 (or the computer 11), and transmits a printer status to the computer 1 (or the computer 11). A FIFO (first-in first-out) memory 22 stores the compressed image data received by the network interface 21. A decoding circuit 23 reads the compressed image data from the FIFO memory 22, decodes the read image data, and outputs the decoded image data to a printer engine 24 (described later). In response to an instruction from a control circuit 25 (described later), the printer engine 24 performs printing in accordance with the image data output by the decoding circuit 23. The control circuit 25 is formed by, for example, a single-chip CPU, and controls the network interface 21, the FIFO memory 22, the decoding circuit 23, and the printer engine 24.

An overview of a printing operation of a printing system formed by the above-described computers 1 and 11 and printer 7 is described next.

When an operator uses the application 3 in the computer 1 to instruct the printer 7 to print a document, a printing instruction is issued from the application 3 to the printer driver 4 through the operating system 2. This allows the printer driver 4 to perform, based on the printing instruction issued from the application 3, conversion and compression into compressed image data (bitmap data), and output of the compressed image data together with a page start command for designating sheet size, the line length of the image data, and the number of lines of the image data, and an image data ending command representing the end of the image data.

After printer commands are output from the printer driver 4, and the operating system 2 notifies the language monitor 5 of a job start, the operating system 2 sequentially sends the printer commands output by the printer driver 4 to the language monitor 5. When the language monitor 5 starts a printing job, the language monitor 5 transmits an occupation requesting command to the printer 7 through the network port driver 6.

When this allows the language monitor 5 to successfully occupy the printer 7, the printer commands received from the operating system 2 are sequentially transmitted to the printer 7 through the network port driver 6. Before transmitting an image data command to the printer 7, the language monitor 5 transmits a status request command, acquires the status of the printer 7, and confirms that the image data command is transmittable. After the language monitor 5 finishes transmission of printer commands for one page, the language monitor 5 transmits a printing request command.

In addition, when the control circuit 25 in the printer 7 receives the printing request command through the network interface 21, the control circuit 25 instructs the printer engine 24 to start printing. This allows the printer engine 24 to feed a sheet, and requests output of image data when the sheet reaches a predetermined position. In response to the output of image data, the decoding circuit 23 reads the compressed image data from the FIFO memory 22, and outputs the original image data obtained by decoding to the printer engine 24. At this time, the image data read from the FIFO memory 22 is erased from the FIFO memory 22.

After that, when the language monitor 5 acquires, from the printer 7, a status indicating that printing has normally finished, a corresponding page memory in the printer 7 is released. When the language monitor 5 acquires, from the printer 7, a status indicating that printing has not normally finished, the language monitor 5 attempts to perform retransmission from a page whose printing has not normally finished.

After the language monitor 5 finishes transmission of printer commands for all pages in one printing job in the above manner, the language monitor 5 transmits a vacating command without waiting for completion of sheet discharging. In addition, after the language monitor 5 transmits the vacating command, the language monitor 5 continues to acquire the status of the printer 7. When the acquired status indicates that printing of a page has normally finished, a corresponding page memory in the printer 7 is released. When the language monitor 5 detects an error, the language monitor 5 transmits an occupation requesting command again and attempts to recover an error page.

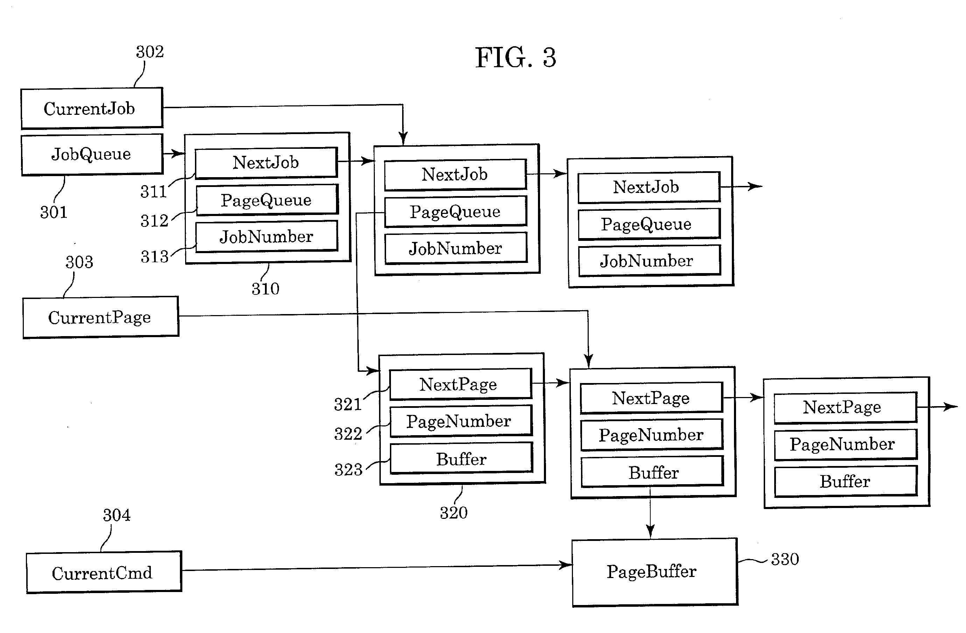

Next, the data structure of job management information managed by the language monitor 5 is described below with reference to Fig. 3.

Fig. 3 shows an example of the data structure of job management information in the first embodiment. As shown in Fig. 3, job queue data (JobQueue) 301 represents the start address of job management information 310. The job management information 310 includes next job data (NextJob) 311 forming a link list. Whenever a job start is reported by the operating system 2, the next job data (NextJob) 311 links new job management information at the end of the link list.

Current job data (CurrentJob) 302 represents the address of beginning job management information that has not been transmitted yet. When finishing transmission of printer commands for all the pages in one job, based on the next job data (NextJob) 311, the current job data (CurrentJob) 302 is updated to represent the next job management information.

The job management information 310 includes job number data (JobNumber) 313 for identifying a job. A number that is reported by the printer 7 in response to the occupation requesting command is stored in the job number data (JobNumber) 313. The job management information 310 also includes page queue data (PageQueue) 312 representing the start address of page management information 320 managed by the job management information 310. Page management information 320 includes next page data (NextPage) 321 forming a link list. Whenever image data for one page is sent from the operating system 2, the next page data (NextPage) 321 links new page management information at the end of the link list.

Current page data (CurrentPage) 303 represents the address of beginning page management information, whose transmission has not been finished yet. When transmission of all the printer commands for one page is finished, the current page data (CurrentPage) 303 is updated to represent the address of the next page management information based on the next page data (NextPage) 321 of this page management information.

The page management information 320 also includes page number data (PageNumber) 322 for identifying a page. A sequential number that begins from the next of a base page number determined at occupation requesting time is set in the page number data (PageNumber) 322. The page management information 320 includes buffer data (Buffer) 323 representing the start address of page buffer data (PageBuffer) 330 managed by the page management information 320. In the page buffer data (PageBuffer) 330, consecutive printer commands for forming the page are set.

Current command data (CurrentCmd) 304 represents the address of a beginning printer command, whose transmission has not been finished yet. When one printer command is transmitted, the current command data (CurrentCmd) 304 is updated to represent the next printer command.

When the language monitor 5 receives, from the printer 7, a status indicating that printing of a page represented by the current page data (CurrentPage) 303 has finished normally, the language monitor 5 releases the page buffer data (PageBuffer) 330 and page management information 320 that relates to the page, and updates the page queue data (PageQueue) 312 in the job management information 310 to represent the next page management information. Subsequently, all the printer commands represented by the current command data (CurrentCmd) 304, and printing of all the pages represented by the page queue data (PageQueue) 312 in the job management information 310 represented by the current job data (CurrentJob) 302 normally ends, thus allowing all the page management information 320 to be released. After that, the job management information 310 for this job is released, and the current job data (CurrentJob) 302 is updated to represent the address of the next job management information.

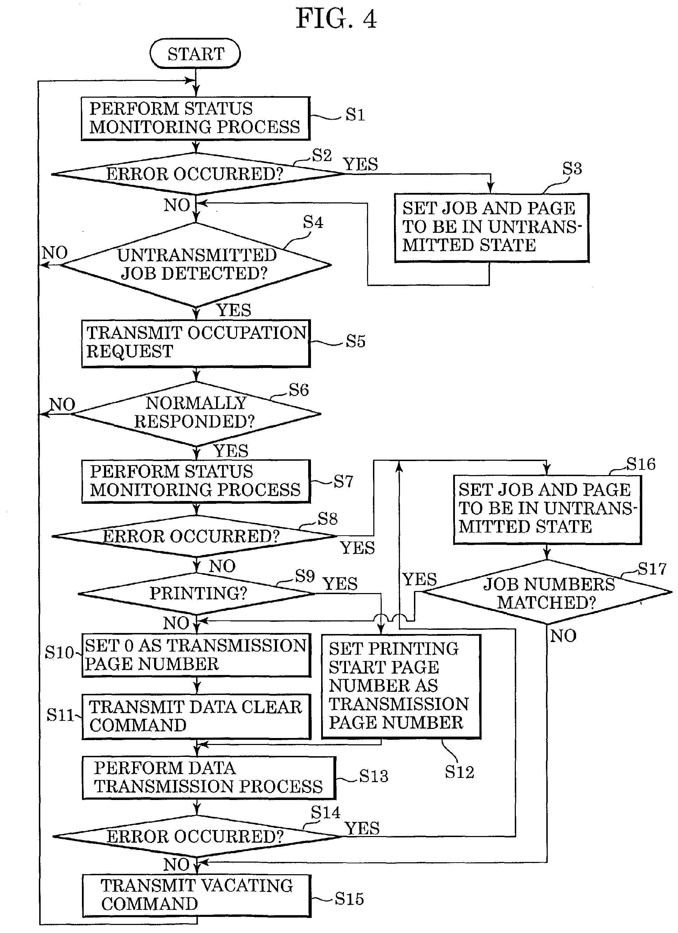

Next, details of a process of the language monitor 5 in the first embodiment are described below with reference to Fig. 4.

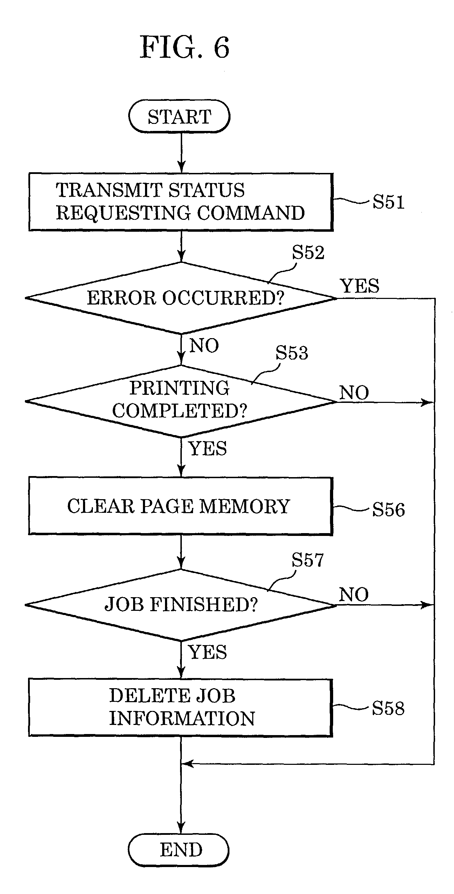

Fig. 4 is a flowchart showing a process of the language monitor 5 in the first embodiment. In step S1, the language monitor 5 performs a status monitoring process (described later with reference to Fig. 6) to acquire the status of the printer 7. In step S2, by referring to the status acquired in step S1, the language monitor 5 determines whether an error has occurred. When an error has occurred, the language monitor 5 proceeds to step S3 and sets all of a job and each page to be in an untransmitted state. Specifically, in the current job data (CurrentJob) 302 shown in Fig. 3, the address of the job management information 310 stored in the job queue data (JobQueue) 301 is set. In the current page data (CurrentPage) 303, the address of the page management information 320 stored in the page queue data (PageQueue) 312 of the job management information 310 is set. In addition, in the current command data (CurrentCmd) 304, the start address of the page buffer stored in the buffer data (Buffer) 323 of the page management information 320 is set. When it is determined in step S2 that no error has occurred, processing of the language monitor 5 proceeds to step S4.

In step S4, the language monitor 5 determines whether an untransmitted job is detected. If no untransmitted job is detected, the language monitor 5 returns to step S1 and waits for the operating system 2 to report a job start. If an untransmitted job is detected, the language monitor 5 proceeds to step S5, and transmits an occupation requesting command. When transmitting the occupation requesting command, the language monitor 5 reports the job number of the job management information 310 as a parameter. The initial value of the job number data (JobNumber) 313 is "0". Accordingly, when this job initially occupies the printer 7, the language monitor 5 reports "0".

In step S6, the language monitor 5 receives a response to the occupation requesting command. If the received response is not a normal response, it is indicated that occupation of the printer 7 fails and processing of the language monitor 5 returns to step S1 and attempts to occupy the printer 7. If the received response is the normal response, the reported job number is recorded in the job number data (JobNumber) 313 and is stored in the job number (not shown) of a job that currently occupies the printer 7. In step S7, the language monitor 5 performs the status monitoring process.

In step S8, by referring to the status acquired in step S7, the language monitor 5 determines whether an error has occurred. If an error did not occur, the language monitor 5 proceeds to step S9 and determines whether the printer 7 is printing. If the printer 7 is not printing, the language monitor 5 proceeds to step S10 and sets "0" as a transmission page number. In step S11, the language monitor 5 transmits a data clear command. At this time, "0" is set as the initial value of the page number.

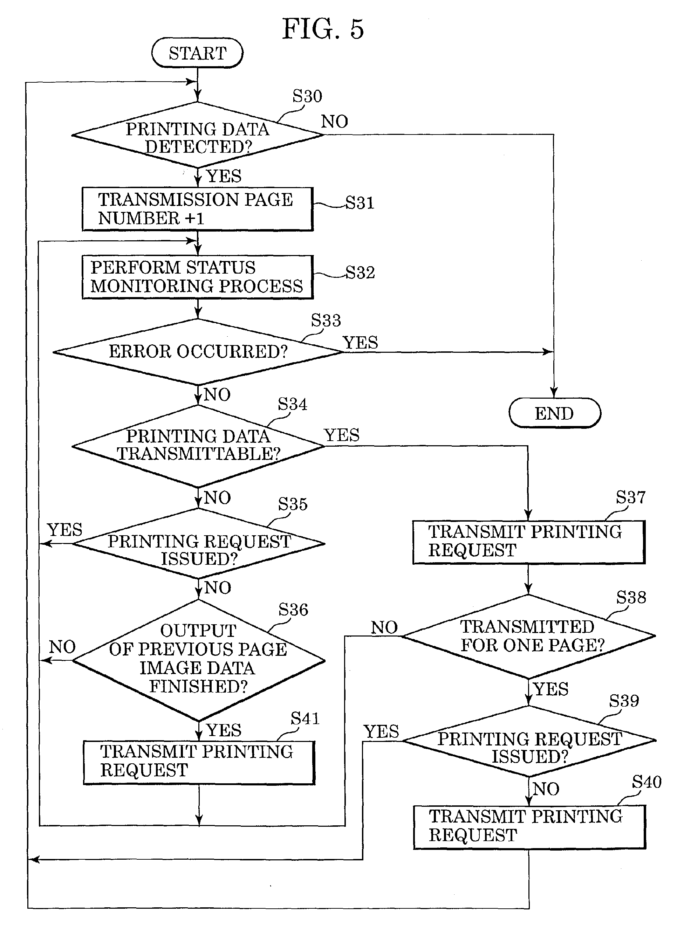

In step S9, if the printer 7 is printing, the language monitor 5 proceeds to step S12. In step S12, by referring to the status acquired in step S7, the language monitor 5 sets a printing start page number as the transmission page number. In step S13, the language monitor 5 performs a data transmission process, which is described later with reference to Fig. 5. When transmission of all pages in the job in process is completed, which is in process, or an error is detected, the data transmission process ends, and the language monitor 5 proceeds to step S14. In step S14, by referring to the latest status acquired in step S13, the language monitor 5 determines whether an error has occurred. If an error has not occurred, transmission of all the pages in the job in process is finished. Accordingly, the language monitor 5 proceeds to step S15 and transmits a vacating command. At this time, the job number of the job that is currently occupying the printer 7 is cleared. Processing of the language monitor 5 then returns to step S1.

After that, the loop formed by steps S1, S2, and S4 is executed. When printing of all the pages in the job finishes normally, a job terminating process is performed in the status monitoring process in step S1. Before the printing of all the pages in the job finishes normally, when an error occurs, the language monitor 5 proceeds to steps S3 to S5, occupies the printer 7, and retries data transmission from a page on which the error occurs.

When the start of the next job is reported to the language monitor 5 before printing of all the pages in the job finishes normally, the language monitor 5 proceeds to step S5 and occupies the printer 7 for the above-described processing. If an error does not occur, in step S13, the language monitor 5 performs data transmission in a new job.

After that, in step S8 or S14, if the error occurs, the language monitor 5 proceeds to step S16 and sets the job and pages to be in an untransmitted state. In step S17, by referring to the latest status acquired, the language monitor 5 determines whether a start job number in the printer status matches the job number of the job that currently occupies the printer 7. If both numbers match each other, the language monitor 5 proceeds to step S10 and retries data transmission from a page on which the error occurs.

On the other hand, if both numbers do not match, that is, when a new job is started before terminating the previous job, and an error occurs in page printing in the previous job, the language monitor 5 proceeds to step S15 and transmits a vacating command before returning to step S1.

After that, the language monitor 5 proceeds to step S1, and attempts to occupy the printer 7. As is described later, if a start job in the printer 7 is a job issued by a corresponding host apparatus, occupation of the printer 7 is immediately allowed, and data transmission is retried from the page on which the error occurs. If not, occupation is rejected until the start job in the printer 7 finishes normally after error recovery is performed.

Fig. 5 is a detailed flowchart showing the data transmission process in step S13 shown in Fig. 4. In step S30, it is determined whether printing data to be transmitted has been detected. If the printing data has not been detected, the process is immediately finished. If printing data has been detected, the process proceeds to step S31, and the transmission page number is incremented by one and set in the page number data (PageNumber) 322 in the page management information 320. In step S32, a status monitoring process is performed. In step S33, it is determined whether an error has occurred. If an error has occurred, the status monitoring process is immediately finished. If an error has not occurred, the process proceeds to step S34, and, by referring to the printer status acquired in step S32, it is determined whether the printing data is transmittable.

If it is determined in step S34 that the printing data is transmittable, the process proceeds to step S37, and the printing data is transmitted. In step S38, it is determined whether data transmission for one page has finished. If the data transmission for one page has not finished yet, the process returns to step S32 and continuously transmits data of a currently transmitted page. If the data transmission for one page has finished, the process proceeds to step S39, and it is determined whether a printing request for this page has been issued. If the printing request has already been issued, the process returns to step S30 and data transmission for the next page is performed. If the printing request has not already been issued, the process proceeds to step S40. In step S40, a printing requesting command is transmitted and the process returns to step S30.

If it is determined in step S34 that the printing data is not transmittable, the process proceeds to step S35, and it is determined whether a printing request for this page has already been issued. If it is determined that the printing request for this page has already been issued, the process returns to step S32, and the language monitor 5 waits for the printing data to be transmittable. If it is determined that the printing request for this page has not already been issued, the process proceeds to step S36. In step S36, by referring to the printer status acquired in step S32, the process determines whether output of image data of the previous page has finished. If it is determined in step S36 that the output of image data of the previous page has not finished, the language monitor 5 returns to step S32 and waits for the printing data to be transmittable since a part of the image data of the previous page is stored in the FIFO memory 22 in the printer 7.

If it is determined in step S36 that the output of image data of the previous page has finished, the process proceeds to step S41 since the FIFO memory 22 in the printer 7 does not store the image data of the previous page at all and does not have any possibility of having free storage capacity. In step S41, a printing requesting command is transmitted and the process proceeds to step S32.

Fig. 6 is a detailed flowchart showing the status monitoring process. In step S51, a status requesting command is transmitted to the printer 7. In step S52, a status response is received from the printer 7, and it is determined whether an error has occurred. If an error has occurred, the status monitoring process is immediately finished. If an error has not occurred, the status monitoring process proceeds to step S53 and determines whether a completely printed page is detected.

Specifically, in order to determine whether a completely printed page is detected, the status monitoring process compares the page number of the completely printed page in the received status with the page number data (PageNumber) 322 of the page management information 320. If an equal page number is detected, it is determined that printing of the page is completed. If an equal page number is not detected, the status monitoring process is immediately finished. If an equal page number is detected, the status monitoring process proceeds to step S56 and deletes the page buffer data (PageBuffer) 330 and the page management information 320, which correspond to the page.

In step S57, it is determined whether all page printing of the job to which the completely printed page belongs is completed. If the printing is not completed, the status monitoring process is immediately finished. If the printing is completed, the status monitoring process proceeds to step S58 and the job management information 310 for the job is deleted and the status monitoring process ends.

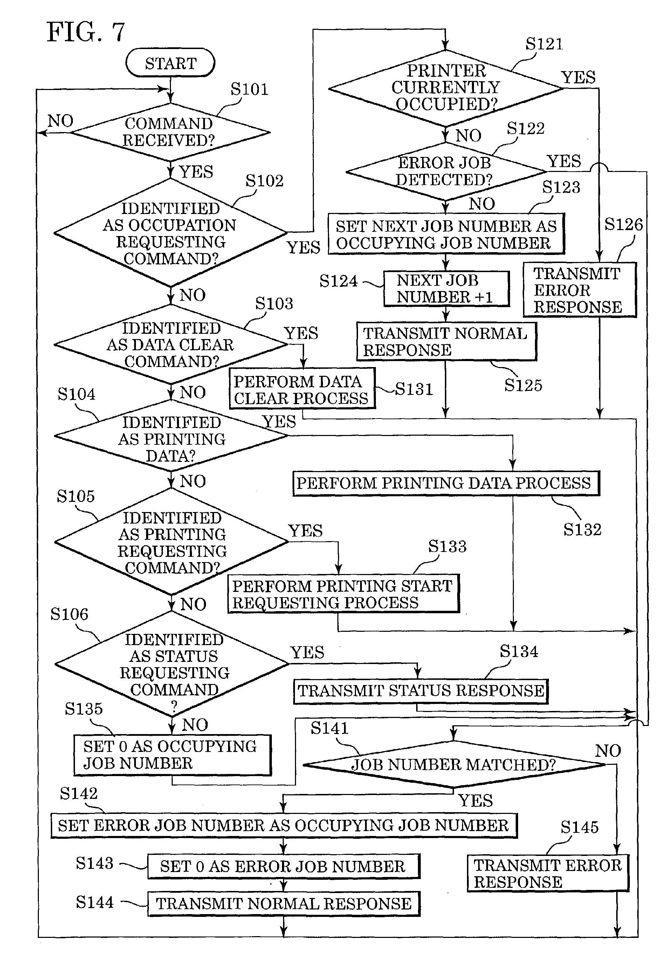

Next, command processing executed by the control circuit 25 in the printer 7, which receives printer commands from the above language monitor 5, is described below with reference to Fig. 7.

Fig. 7 is a flowchart showing command processing in the printer 7. In step S101, the processing waits for the network interface 21 to receive a printer command. The processing proceeds to step S102 when the network interface 21 receives the printer command, and determines whether the received command is identified as an occupation requesting command. If the received command is identified as an occupation requesting command, the processing proceeds to step S121 and determines whether the printer 7 is currently occupied. If the printer 7 is occupied, the processing proceeds to step S126 and transmits an error response before returning to step S101.

If the printer 7 is not currently occupied, the processing proceeds to step S122 and determines whether an error has been detected, that is, whether an error job number is a value other than "0". If no error job has been detected, the processing proceeds to step S123, and the next job number is set as an occupying job number. In step S124, the next job number is incremented by one. The initial value of the next job number is "1". In step S125, a normal response is transmitted with the occupying job number, and the processing returns to step S101.

If it is determined in step S122 that the error job is detected, the processing proceeds to step S141, and determines whether the error job number matches a job number added to the occupation requesting command. If both numbers do not match each other, the processing proceeds to step S145 and transmits an error response before returning to step S101. If both numbers match each other, the processing proceeds to step S142 and sets the error job number as the occupying job number. In step S143, the error job number is cleared. In step S144, the normal response is received together with the occupying job number, and the processing returns to step S101.

If it is determined in step S102 that the received command is not an occupation requesting command, the processing proceeds to step S103 and determines whether the received command is a data clear command. If the received command is a data clear command, processing proceeds to step S131 and performs a data clear process before returning to step S101. In this data clear process, specifically, image data stored in the FIFO memory 22 and a page start command stored in a work area in the control circuit 25 are cleared, and a page number designated by the data clear command is set as a printing start page number, an image output completion page number, or a printing completion page number.

In step S103, if the received command is not a data clear command, the processing proceeds to step S104 and determines whether the received command is identified as a printing data command. If the received command is a printing data command, processing proceeds to step S132 and performs a printing data process before returning to step S101. In this printing data process, specifically, if an image data command is received as the printing data command, image data is stored in the FIFO memory 22. In addition, if the page start command is received, the image data is stored in the work area of the control circuit 25.

If it is determined in step S104 that the received command is not a printing data command, the processing proceeds to step S105 and determines whether the received command is a printing requesting command. If the received command is a printing requesting command, processing proceeds to step S133 and performs a printing start requesting process before returning to step S101. In this printing start requesting process, specifically, the printer engine 24 is requested to start printing in response to the already received page start command, and the printing start page number is incremented by one.

If it is determined in step S105 that the received command is not a printing requesting command, processing proceeds to step S106 and determines whether the received command is identified as a status requesting command. If the received command is a status requesting command, processing proceeds to step S134, and reports a printer status by transmitting a status response. The reported printer status includes a start job number, an error state, a printing start page number, an image output completion page number, and a printing completion page number. Processing then returns to step S101.

If it is determined in step S106 that the received command is not a status requesting command, it is indicated that the vacating command is received. Accordingly, processing proceeds to step S135, and the occupying job number is cleared and processing returns to step S101.

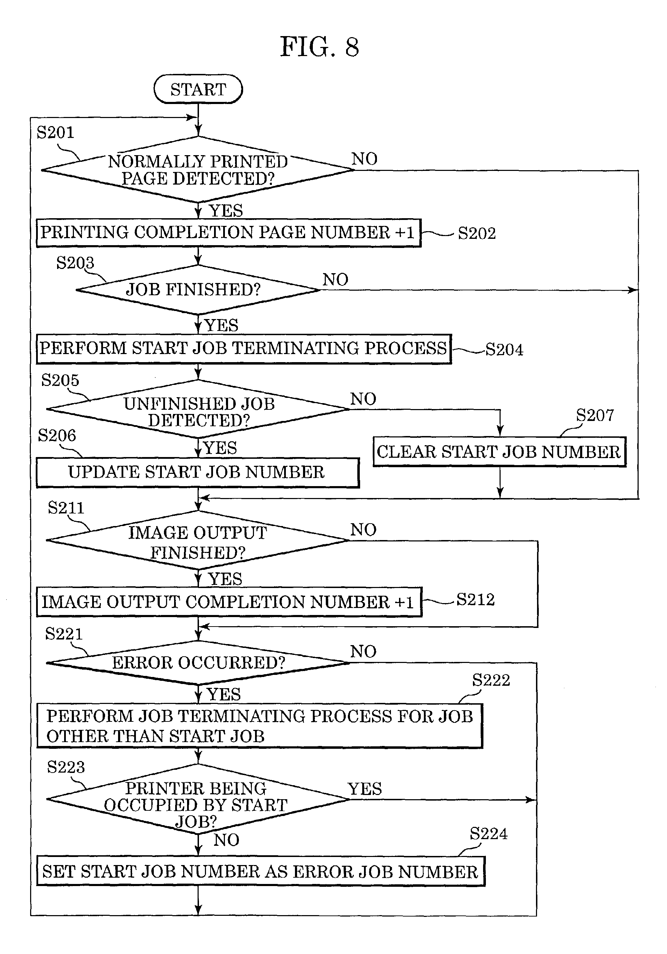

Next, a printing process executed in parallel with the above command processing is described below with reference to Fig. 8.

Fig. 8 is a flowchart showing a printing process of the printer 7 in the first embodiment. In step S201, it is determined whether a normally printed page is detected. If a normally printed page is not detected, the printing process proceeds to step S211. If a normally printed page is detected, the printing process proceeds to step S202 and the printing completion page number is incremented by one. In step S203, it is determined whether printing of all pages in a job to which the normally printed page belongs has finished normally. If the printing of all the pages has not finished normally, the printing process proceeds to step S211 (described later). If the printing of all the pages has finished normally, the printing process proceeds to step S204 and performs a start job terminating process. In step S205, it is determined whether an unfinished job is detected. If an unfinished job is detected, the printing process proceeds to step S206 and updates the start job number. After that, the printing process proceeds to step S211. If an unfinished job is not detected, the printing process proceeds to step S207 and clears the start job number. The printing process proceeds to step S211.

In step S211, it is determined whether a page on which image output is finished is detected. If the page on which image output is finished is not detected, the printing process directly proceeds to step S221. If the page on which image output is finished is detected, the printing process proceeds to step S212. In step S212, an image output completion page number is incremented by one and the printing process proceeds to step S221.

In step S221, it is determined whether an error has occurred. If an error has not occurred, the printing process returns to step S201. If an error has occurred, the printing process proceeds to step S222 and performs the terminating process for a job other than the start job. In step S223, it is determined whether the start job is currently occupying the printer 7, that is, whether the start job number and the occupying job number match each other. If the start job is currently occupying the printer 7, the printing process returns to step S201. If the start job is not currently occupying the printer 7, the printing process proceeds to step S224. In step S224, the start job number is set as the error job number and the printing process returns to step S201.

As described above, according to the first embodiment, when the host apparatus finishes transmission of all pages in a printing job, by vacating the printer 7 without awaiting a discharge completion notification, data transmission for the next printing job can be immediately started, thus eliminating a downtime between jobs. In addition, by providing the host apparatus with a page memory for error recovery, correct error recovery can be performed even if an error occurs.

### Second Embodiment

Details of a second embodiment of the present invention are described below with reference to the accompanying drawings.

In the first embodiment, when an error that relates to a printing job different from one printing job occupying the printer 7 occurs, the printer 7 is instructed to change to a vacated state by the host apparatus. However, in the second embodiment, an error which relates to a printing job different from one printing job occupying the printer 7 occurs, the printer 7 forcibly cancels the vacated state.

A host apparatus and printer 7 in the second embodiment are identical in configuration to those shown in Figs. 1 and 2. Accordingly, their detailed description is omitted.

Similarly to the first embodiment, in the second embodiment, based on the job management information shown in Fig. 3, the language monitor 5 manages printing jobs.

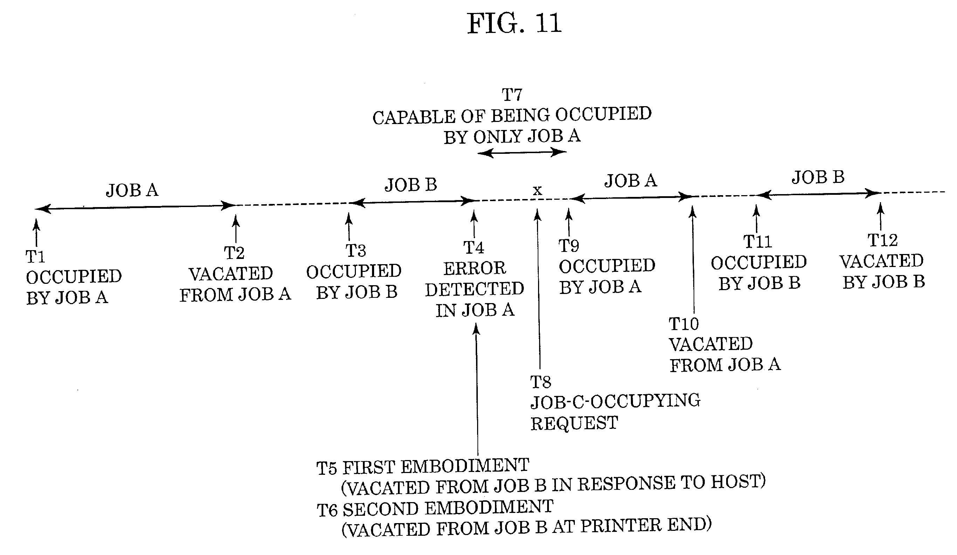

Changing of the printer 7 from a job occupying state to a vacated state when an error occurs is described below with reference to Fig. 11.

At time T1, the printer 7 is occupied by job A in response to an occupying request of job A. When transmission based on job A finishes at time T2, the occupation by job A is cancelled.

At time T3, in response to an occupying request of job B, the printer 7 is occupied by job B. After that, when an error in job A is detected at time T4, at time T5 in the first embodiment, the occupation by job B is cancelled in response to an instruction from the host apparatus. In addition, at time T6 in the second embodiment, the occupation by job B is cancelled by the printer 7.

In period T7, the printer 7 accepts only an occupying request from job A. For example, if an occupying request from job C is received at time T8, the occupying request is not accepted by the printer 7.

At time T9, job A occupies the printer 7 based on its occupying request, and error recovery is performed. After that, when transmission based on job A finishes at time T10, the occupation by job A is cancelled.

Next, since the occupation by job B is cancelled halfway (at time T4), job B requests occupation and occupies the printer 7 for retransmission. When transmission based on job B finishes at time T12, the occupation by job B is cancelled.

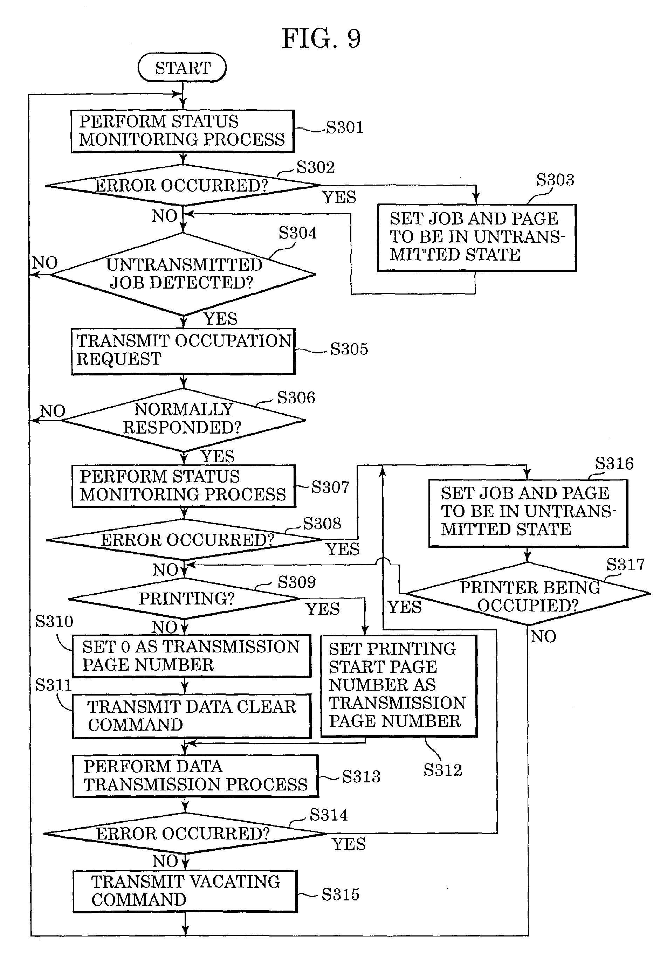

Next, details of a process of the language monitor 5 in the second embodiment are described below with reference to Fig. 9. Steps S301 to S316 shown in Fig. 9 are identical to the steps S1 to S16 shown in Fig. 4 in the first embodiment. Accordingly, only differences from the second embodiment are described below.

Fig. 9 is a flowchart showing the process of the language monitor 5 in the second embodiment. Similarly to the first embodiment, after the language monitor 5 is notified of a job start by the operating system 2, and transmits an occupation requesting command to the printer 7, when the language monitor 5 is notified of the start of the next job before printing of all pages in one job finishes normally, the language monitor 5 occupies the printer 7 and performs a data transmission process for the new job. When an error occurs during a status monitoring process, the language monitor 5 proceeds from step S308 or S314 to step S316.

In step S316, the language monitor 5 sets the job and each page to be in untransmitted state. In step S317, by referring to the latest status acquired, the language monitor 5 determines whether the job number of the job that currently occupies the printer 7 is "0". If the job number of the job that currently occupies the printer 7 is not "0", it is indicated that the printer 7 is continuously occupied, and processing of the language monitor 5 proceeds to step S310 and retries data transmission from a page on which the error occurs.

If the job number of the job that currently occupies the printer 7 is "0", it is indicated that an error in a different preceding job vacates the printer 7, and processing of the language monitor 5 returns to step S301. After that, in step S305, the language monitor 5 attempts to occupy the printer 7. In other words, if the start job in the printer 7 is a job issued by the host apparatus, occupation is immediately allowed and data transmission is retried from the page on which the error occurs. If not, the occupation is rejected until the start job finishes normally after error recovery.

Next, a printing process of the printer 7 in the second embodiment is described below. Command processing executed by the control circuit 25 in the printer 7 is identical to that in the first embodiment described with reference to Fig. 7. Accordingly, a description of the command processing in the second embodiment is omitted.

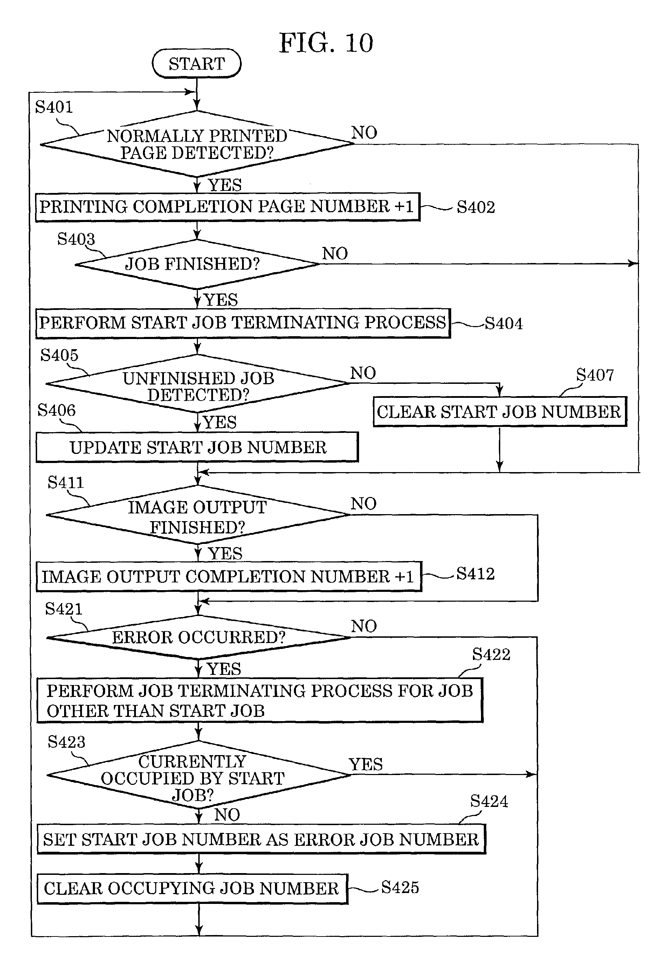

The printing process, which is executed in parallel with the above command processing, is described below with reference to Fig. 10. The steps S401 to S407, S411 to S412, and S421 to S424 shown in Fig. 10 are identical to the steps S201 to S207, S211 to S212, and S221 to S224 shown in Fig. 8 in the first embodiment. Accordingly, only differences are described below.

Fig. 10 is a flowchart showing the printing process of the printer 7 in the second embodiment. Similarly to the first embodiment, when an error occurs after checking the printer 7 for the start of page printing and a job end, a terminating process or a job other than the start job is performed. It is determined whether the start job is currently occupying the printer 7, that is, whether the start job number and the occupying job number match each other. If the start job is not occupying the printer 7, the printing process proceeds to step S424 and sets the start job number as the error job number. In step S425, by setting "0" as an occupying job number, the occupation is forcibly cancelled and the printing process returns to step S401.

As described above, according to the second embodiment, when an error relating to a different job that does not occupy the printer 7 occurs, the printer 7 forcibly cancels the occupation, thus minimizing a downtime between jobs.

The present invention may be applied to a system formed by a plurality of apparatuses (e.g., a host computer, an interface device, a reader, a printer, etc.), and to a single apparatus (e.g., a copying machine, a facsimile machine, etc.).

In addition, a system or apparatus may be supplied with a recording medium containing program code of software realizing functions in the above-described embodiments, and a computer (CPU or MPU (micro-processing unit)) in the system or apparatus reads and executes the program code on the recording medium.

In this case, the program code itself, read from the recording medium, realizes the functions in the above-described embodiments.

Examples of types of the recording medium for supplying the program code include, for example, a floppy disk, a hard disk, an optical disk, a magnetooptical disk, a CD-ROM (compact disk - ROM), a CD-R (compact disk - recordable), a magnetic tape, a nonvolatile memory, and a read-only memory.

In addition, by executing the program code read by the computer, not only the functions in the above-described embodiments are realized, but also an operating system (or the like) running on the computer performs all or part of actual processing on the basis of instructions of the program code, and the processing realizes the functions in the above-described embodiments.

Moreover, after the program code read from the recording medium may be written in a memory provided in an add-in board inserted into a computer or in an add-in unit connected to the computer, a CPU (or the like) provided in the add-in board or add-in unit performs all or part of actual processing, and the processing realizes the functions in the above-described embodiments.

According to the foregoing embodiments of the present invention, a downtime between jobs can be minimized and the performance of a printing system can be improved.

While the present invention has been described with reference to what are presently considered to be the embodiments, it is to be understood that the invention is not limited to the disclosed embodiments. On the contrary, the invention is intended to cover various modifications and equivalent arrangements included within the spirit and scope of the appended claims. The scope of the following claims is to be accorded the broadest interpretation so as to encompass all such modifications and equivalent structures and functions.

This application claims priority from Japanese Patent Application No. 2003-416727 filed on December 15, 2003, and Japanese Patent Application No. 2004-161573 filed on May 31, 2004, which are hereby incorporated by reference herein.

## Claims

1. A printing system comprising:
at least one host apparatus including a page memory for error recovery and;
a printer connected to the host apparatus via a bidirectional interface,
wherein the host apparatus includes instructing means for instructing the printer to change to an occupied state before transmitting printing data of a printing job to the printer, and instructing the printer to change to a vacated state without waiting for a printing completion notification from the printer after transmitting the printing data; and
wherein the printer includes means for changing the printer to one of the occupied state and the vacated state in response to an instruction from the host apparatus.

2. The printing system according to Claim 1, wherein:
the host apparatus monitors status of the printer after instructing the printer to change to the occupied state; and
the host apparatus releases the page memory in case that page printing finishes normally.

3. The printing system according to Claim 1, wherein:
the host apparatus monitors status of the printer after instructing the printer to change to the vacated state; and
in case that an error is detected, the host apparatus instructs the printer to change to the occupied state, and retransmits printing data of a page on which the error occurred.

4. The printing system according to Claim 1, wherein:
the host apparatus monitors status of the printer after instructing the printer to change to the occupied state; and
in case that an error relating to a different printing job is detected, the host apparatus instructs the printer to change to the vacated state.

5. The printing system according to Claim 1, wherein, in case that a page is not normally printed, the printer rejects an instruction of changing to the occupied state from another host apparatus different from the host apparatus that instructed the printer to print the page.

6. The printing system according to Claim 1, wherein, in case that an error relating to a different printing job that does not occupy the printer is detected, the printer changes to the vacated state.

7. A method for controlling a printing system comprising at least one host apparatus including a page memory for error recovery and a printer connected to the host apparatus via a bidirectional interface, the method comprising steps of:
instructing the printer to change to an occupied state before transmitting printing data of a printing job to the printer;
instructing the printer to change to a vacated state without waiting for a printing completion notification from the printer after transmitting the printing data; and
changing the printer to one of the occupied state and the vacated state in response to an instruction from the host apparatus.

8. A print control method comprising steps of:
transmitting an occupation request to a printer before transmitting printing data of a printing job to the printer;
transmitting a vacating request to the printer after transmitting the printing data; and
monitoring status of the printer after transmitting the vacating request to the printer; and
transmitting the occupation request to the printer before transmitting the printing data to the printer in case that an error is detected.

9. A program for allowing a computer to execute the method of Claim 8.

10. A host apparatus comprising:
first means for transmitting an occupation request to a printer before transmitting printing data of a printing job to the printer;
second means for transmitting a vacating request to the printer after transmitting the printing data; and
third means for monitoring status of the printer after transmitting the vacating request to the printer, and transmitting the occupation request before transmitting the printing data to the printer in case that an error is detected.

11. A printing method comprising steps of:
determining whether an error job is detected in receiving an occupation request;
if the error job is detected, determining whether a job that transmits the occupation request matches the error job; and
transmitting a normal response if the job that transmits the occupation request matches the error job, and transmitting an error response if the job that transmits the occupation request does not match the error job.

12. A program for allowing a computer to execute the method of Claim 11.

13. A printer comprising:
means for determining whether an error job is detected in receiving an occupation request;
means for determining whether a job that transmits the occupation request matches the error job in case that the error job is detected; and
means for transmitting a normal response in case that the job that transmits the occupation request matches the error job, and transmitting an error response in case that the job that transmits the occupation request does not match the error job.

14. The printer according to Claim 13, wherein the printer changes to a vacated state in case that the job that transmits the occupation request does not match the error job.

15. A printer comprising:
first means for setting a first job to be in a printer occupying state in response to an occupying request from the first job, and canceling an occupying state of the first job in response to a vacating request from the first job; and
second means for canceling a printer occupying state of a second job in response to an error in the first job during occupation of the printer by the second job.

16. The printer according to Claim 15, wherein the second means cancels the occupying state of the second job in response to the error in the first job and accepts only the occupying request from the first job during the occupation of the printer by the second job.

17. A printing method comprising steps of:
setting a first job to be in a printer occupying state in response to a printer occupying request from the first job;
canceling the occupying state of the first job in response to a vacating request from the first job; and
canceling an occupying state of a second job in response to an error in the first job during occupation by the second job.

18. The printing method according to Claim 17, wherein canceling the occupying state of the second job further comprises only accepting the occupying request from the first job.

19. A program for allowing a computer to execute the method of Claim 18.

20. A program for allowing a computer to execute the method of Claim 17.

21. A print control apparatus comprising:
first instructing means for instructing a printer to change to an occupied state before transmitting printing data of a printing job to the printer, and instructing the printer to change to a vacated state without waiting for a printing completion notification from the printer after transmission the printing data; and
second instructing means for performing status monitoring after the printer is changed to the vacated state by the first instructing means, and instructing the printer to change to the occupied state in case that an error is detected.

22. A print control method comprising:
instructing a printer to change to an occupied state before transmitting printing data of a printing job to the printer;
instructing the printer to change to a vacated state after transmitting the printing data without waiting for a printing completion notification from the printer;
performing status monitoring after the printer is changed to the vacated state; and
instructing the printer to change to the occupied state in case that an error is detected.

23. A program for allowing a computer to execute the method according to Claim 22.
